# EUROPEAN PATENT APPLICATION

(11) **EP 4 601 098 A1**
(43) Date of publication of application: **13.08.2025**
(21) Application number: 23914974.3
(22) Date of filing: 15.12.2023
(51) Int. Cl.: H01M 50/333, H01M 50/342, H01M 50/383, H01M 50/211

(54) **BATTERY PACK AND DEVICE INCLUDING SAME**

(30) Priority: 05.01.2023 KR 20230001881
(71) Applicant: LG Energy Solution, Ltd., Seoul 07335 (KR)
(72) Inventor: PARK, Junhee, Daejeon 34122 (KR)
(74) Representative: Plasseraud IP
(86) International application number: PCT/KR2023/020828
(87) International publication number: WO 2024/147514

(57) **Abstract**

Disclosed is a battery pack including: a plurality of battery modules; and a housing accommodating the plurality of battery modules, wherein the housing has a plurality of valves capable of being opened and closed, and the plurality of valves are opened and closed sequentially based on an internal pressure of the battery pack.

## Description

### [Technical Field]

### CROSS-REFERENCE TO RELATED APPLICATION

This application claims priority to and the benefit of Korean Patent Application No. 10-2023-0001881 filed in the Korean Intellectual Property Office on January 05, 2023, the entire contents of which are incorporated herein by reference.

The present disclosure relates to a battery pack and a device including the same, and more particularly, to a battery pack with improved safety, and a device including the same.

### [Background Art]

As a mobile device such as a mobile phone, a laptop computer, a camcorder or a digital camera is used daily in modern society, development of technology related to the mobile device as described above is being actively developed. In addition, a secondary battery capable of being charged and discharged may be a method to solve air pollution caused by a conventional gasoline vehicle using a fossil fuel, and used as a power source of an electric vehicle (EV), a hybrid electric vehicle (HEV), a plug-in hybrid electric vehicle (P-HEV), or the like. Accordingly, there is an increasing need for development of the secondary battery.

The secondary battery currently commercialized may include a nickel cadmium battery, a nickel hydride battery, a nickel zinc battery, and a lithium secondary battery. Among these batteries, the lithium secondary battery may be in spotlight because of having little memory effect compared to the nickel-based secondary battery, thus having its free charging and discharging, very low self-discharge rate, and high energy density.

The lithium secondary battery may mainly use a lithium-based oxide and a carbon material as a positive electrode active material and a negative electrode active material, respectively. The lithium secondary battery may include an electrode assembly in which a positive electrode plate and a negative electrode plate to which the positive electrode active material and the negative electrode active material are respectively applied are disposed while having a separator interposed therebetween, and a casing sealing and housing the electrode assembly together with an electrolyte, that is, a battery case.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, based on a type of the casing.

The secondary battery used in a small device may have two or three battery cells disposed therein. However, the secondary battery used in a medium to large-sized device such as an automobile may use a battery module in which a plurality of battery cells are electrically connected to each other. Such a battery module in which the plurality of battery cells are connected in series or parallel to each other to form a battery cell assembly may have improved capacity and output. In addition, one or more battery modules may be mounted in the device together with various control and protection systems such as a battery management system (BMS) and a cooling system to form a battery pack.

When forming the battery pack by connecting a plurality of battery cells in series/parallel to each other, generally used is a method of first forming the battery module including at least one battery cell, and then forming the battery pack by adding another component by using at least one battery module. The number of battery modules included in the battery pack or the number of battery cells included in the battery module may be set in various ways based on the required output voltage or charge/discharge capacity.

In particular, due to the development of a high-capacity cell, safety of the secondary battery, especially its thermal propagation feature, has recently been recognized as important. As the cell has an increased capacity, thermal propagation safety may be lower, which needs to be improved. Various technologies are being attempted to prevent such thermal propagation. When a problem such as a thermal event occurs, a conventional battery pack having low energy density may be prevented from a flame leakage to the outside due to its low energy and sufficient space. However, a recent battery pack using the high-capacity cell may have difficulty in preventing or controlling the thermal propagation due to its higher energy density.

### [Disclosure]

### [Technical Problem]

The present disclosure attempts to provide a battery pack having higher safety by preventing thermal propagation of the battery pack and preventing battery pack explosion or external flame leakage when even using a high-capacity cell, and a device including the same.

However, problems to be solved by embodiments of the present disclosure are not limited to the above-mentioned problems and may be variously expanded in a range of the spirit of the present disclosure included in the embodiments.

### [Technical Solution]

According to an embodiment, a battery pack includes: a plurality of battery modules; and a housing accommodating the plurality of battery modules, wherein the housing has a plurality of valves capable of being opened and closed, and the plurality of valves are opened and closed sequentially based on an internal pressure of the housing.

The plurality of valves may include first to nth valves, and an opening pressure of each of the plurality of valves may be greater than or equal to a pressure at which external oxygen flows into the housing and less than or equal to a pressure at which the housing is destroyed.

The nth valve may be opened as the internal pressure of the housing rises while the first to n-1th valves are opened.

The nth to first valves may be closed sequentially as the internal pressure of the housing drops.

Any one of the plurality of valves may include a valve body part including a first flange part disposed outside the housing, a second flange part disposed in the housing, and a connection part connecting the first flange part and the second flange part to each other, and an elastic part disposed between the second flange part and the housing and surrounding the connection part.

The valve may be opened by compressing the elastic part by compressing the second flange part when the internal pressure of the housing rises.

Each of the plurality of valves may have a different opening pressure by at least one of a different size of the valve body part and a different elastic force of the elastic part.

Any one of the plurality of valves may include a valve body part including a first flange part disposed outside the housing, a second flange part disposed in the housing, and a connection part connecting the first flange part and the second flange part to each other, a support part disposed between the first flange part and the housing, and a sensor part disposed in one surface of the support part that faces the inside of the housing.

The second flange part may further include a gas communication hole configuring an internal gas emission passage while the valve is opened.

The sensor part may include a sensing hole concave in the one surface of the support part, a sensing wire disposed in the sensing hole, and one or more sensors sequentially coming into contact with the sensing wire.

According to another embodiment, a device includes the at least one battery pack described above.

### [Advantageous Effects]

According to the embodiments of the present disclosure, it is possible to provide the battery pack having the higher safety by preventing the thermal propagation of the battery pack and preventing the battery pack explosion or the external flame leakage even when using the high-capacity cell, and the device including the same.

The effects of the present disclosure are not limited to the above-mentioned effects, and other effects that are not mentioned may be obviously understood by those skilled in the art from the claims.

### [Description of the Drawings]

FIG. 1 is an exploded perspective view of a battery module included in a battery pack according to an embodiment of the present disclosure.
FIG. 2 is a view showing the battery pack according to an embodiment of the present disclosure.
FIG. 3 is a graph showing the opening and closing stages of a valve based on a pressure when a thermal event occurs in the battery pack of FIG. 2 to increase an internal pressure of the battery pack.
FIGS. 4A and 4B are views each schematically showing the structure and opening and closing process of the valve in the battery pack of FIG. 2.
FIGS. 5A and 5B are views each schematically showing the structure and opening and closing process of the valve in the battery pack according to another embodiment of the present disclosure.
FIG. 6 is an enlarged view of a portion VI of FIG. 5.

### [Mode for Invention]

Hereinafter, embodiments of the present disclosure are described in detail with reference to the accompanying drawings so that those skilled in the art to which the present disclosure pertains may easily practice the present disclosure. The present disclosure may be implemented in various different forms and is not limited to the embodiments provided herein.

A portion unrelated to the description is omitted in order to obviously describe the present disclosure, and the same or similar components are denoted by the same reference numeral throughout the specification.

In addition, the size and thickness of each component shown in the accompanying drawings are arbitrarily shown for convenience of explanation, and therefore, the present disclosure is not necessarily limited to contents shown in the drawings. The thicknesses are exaggerated in the drawings in order to clearly represent several layers and regions. In addition, the thicknesses of some layers and regions are exaggerated in the drawings for convenience of explanation.

In addition, when an element such as a layer, a film, a region, or a substrate is referred to as being "on" or "above" another element, the element may be "directly on" another element or may have a third element interposed therebetween. On the contrary, when an element is referred to as being "directly on" another element, there is no third element interposed therebetween. In addition, when an element is referred to as being "on" or "above" a reference element, the element may be disposed on or below the reference element, and may not necessarily be "on" or "above" the reference element toward an opposite direction of gravity.

In addition, throughout the specification, unless described to the contrary, "including" any component will be understood to imply the inclusion of other elements rather than the exclusion of other elements.

In addition, throughout the specification, an expression "on the plane" may indicate a case where a target is viewed from the top, and an expression "on the cross section" may indicate a case where a cross section of the target taken in a vertical direction is viewed from its side.

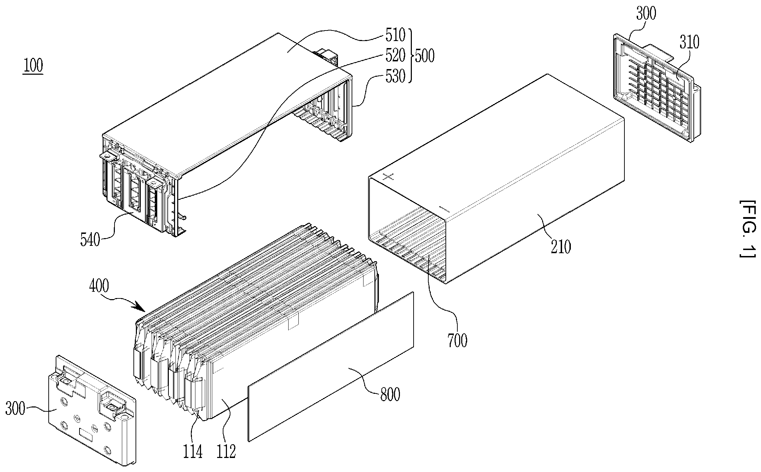

Hereinafter, a battery pack of the present disclosure is described with reference to FIGS. 1 to 3.

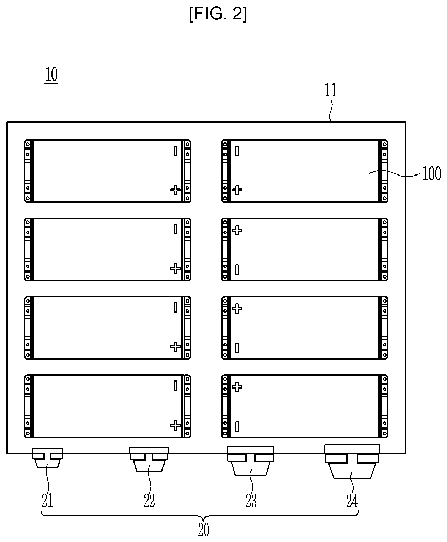

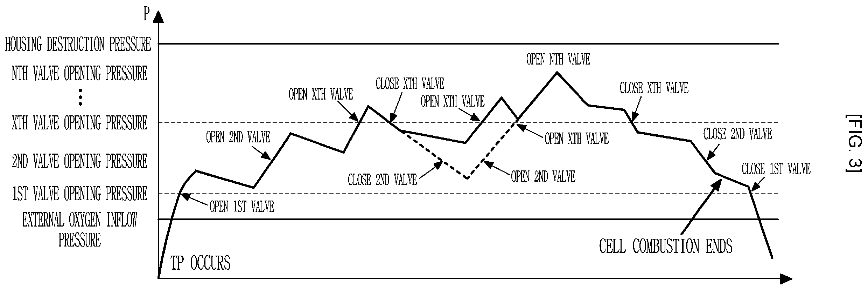

FIG. 1 is an exploded perspective view of a battery module included in a battery pack according to an embodiment of the present disclosure; FIG. 2 is a view showing the battery pack according to an embodiment of the present disclosure; and FIG. 3 is a graph showing the opening and closing stages of a valve based on a pressure when a thermal event occurs in the battery pack of FIG. 2 to increase an internal pressure of the housing.

Referring to FIG. 1, a battery module 100 included in the battery pack according to an embodiment of the present disclosure may include a battery cell assembly 400 including one or more battery cells, a module frame 210 storing the battery cell assembly 400, and an end plate 300 disposed at each of two ends of the battery cell assembly 400 in a length direction and coupled to an opening of the module frame 210.

The battery cell assembly 400 may be a secondary battery assembly including a plurality of battery cells 112. The battery cell assembly 400 may include the plurality of battery cells 112, and each battery cell may include an electrode lead 114. The battery cell 112 may be a pouch-type battery cell having a plate shape, and is not limited thereto. The electrode lead 114 may be a positive electrode lead or a negative electrode lead. Here, an end of the electrode lead 114 of each battery cell 112 may be bent in one direction, and may thus come into contact with the end of the electrode lead of another battery cell 112 adjacent thereto. The two electrode leads 114 in contact with each other may be fixed to each other by welding or the like, thereby making the battery cells 112 in the battery cell assembly 400 be electrically connected to each other.

In addition, a bus bar frame 500 stored in the module frame 210 may be disposed along with the battery cell assembly 400. The bus bar frame 500 may include an upper frame 510 disposed on top of the cell assembly 400, a front frame 520 disposed on a front surface of the battery cell assembly 400, and a rear frame 530 disposed on a rear surface of the battery cell assembly 400, and a bus bar 540 connected to the electrode lead 114 of the battery cells included in the battery cell assembly 400 may be mounted on each of the front frame 520 and the rear frame 530.

The plurality of battery cells 112 may be vertically stacked for the electrode leads 114 are aligned in one direction to form the battery cell assembly 400. The battery cell assembly 400 may be stored in the module frame 210 having at least one opening open in the length direction of the battery cell assembly 400. Here, the electrode leads 114 may be drawn out outward from the module frame 210 through the opening, and the drawn electrode lead 114 may be coupled to each of the front frame 520 and the rear frame 530 of the bus bar frame 500 to be electrically connected to the bus bar 540 mounted hereon. Here, the bus bar frame 500 may be made of an insulating material, for example, a non-conductive synthetic resin, and the bus bar 540 may be made of a conductive metal material.

The battery module 100 may include a flexible printed circuit board (FPCB, not shown) extending from the top of the battery cell assembly 400 in the length direction of the module frame 210 and mounted thereon to detect the battery cell 112. In addition, the battery module 100 may include various electrical components, and may include, for example, an internal circuit board (ICB) and a battery management system (BMS). The electrical components such as the ICB and a BMS board may be electrically connected to the plurality of battery cells 112.

The battery module 100 may further include a thermally conductive resin layer 700 disposed between a lower surface of the battery cell assembly 400 and the module frame 210. The thermally conductive resin layer 700 may be formed by an injected thermally conductive resin, and serve to transfer heat occurring in the battery cell assembly 400 to the bottom of the battery module 100 and serve to fix the cell assembly 400 into the battery module 100.

Meanwhile, a heat sink 800 may be disposed on a side surface of the battery cell assembly 400 and may be stored in the module frame 210 together with the battery cell assembly 400, and is not particularly limited.

Hereinabove, the description describes the configuration of the battery module 100, the battery module 100 is not limited to this form or configuration, and may have a different form or configuration in some cases.

Next, the description describes a battery pack 10 according to an embodiment of the present disclosure with reference to FIGS. 2 to 4.

The battery pack 10 may include one or more battery modules 100, a housing 11 accommodating the battery modules, and a plurality of valves 20 formed in the housing 11 and capable of being opened and closed.

The housing 11 may include a pack frame (not shown) on which one or more battery modules 100 are disposed, and a top plate coupled to the pack frame to thus seal the battery module 100, is not limited to this configuration, and may appropriately adopt any structure capable of protecting the battery module 100 from the outside.

The plurality of valves 20 formed in the housing 11 may be valves capable of being opened and closed, and may include first to nth valves. In this embodiment, the plurality of valves 20 are shown as including a first valve 21, a second valve 22, a third valve 23, and a fourth valve 24, are not limited thereto, and may include an appropriate number of valves by considering the capacity and number of the battery module 100 included in the battery pack 10 and an opening pressure of each valve 20.

Each of the plurality of valves 20 may be opened and closed based on set opening and closing pressures. In particular, the opening pressure may be increased sequentially from the first valve to the nth valve. Here, the opening pressure of each of the plurality of valves 20 may be set to be greater than a pressure at which oxygen flows into the housing 11 and less than a pressure at which the housing 11 is destroyed or exploded.

Its detail is described in more detail with reference to FIG. 3.

That is, as shown in FIG. 3, a thermal event (or thermal propagation) may occur in the battery pack 10 to increase its internal pressure. In this case, the first valve 21 may be opened to reduce a gas to the outside, thereby suppressing increase in the internal pressure. However, when the gas continuously occurs, the internal pressure may be continuously increased even while the first valve 21 is opened. Accordingly, when the internal pressure reaches the opening pressure of the second valve 22, the second valve 22 may also be opened to emit the internal gas.

In this way, the valves 20 may be opened sequentially, and the internal gas occurrence may stop while an xth valve, for example, the third valve 23 is opened. In this case, when the internal pressure is reduced, the third valve 23 may be closed, and the second valve 22 may be closed when the internal pressure is continuously reduced to reach the closing pressure of the second valve 22. If the valve is not closed here and continue to remain open, the internal pressure may continuously drop, and drop to eventually reach an external oxygen inflow pressure. Accordingly, oxygen may flow in from the outside, combustion in the battery pack 10 may thus be promoted, thereby causing flame occurrence and external propagation of the flame, which is not preferable. However, in the present disclosure, the valve 20 may be opened sequentially and then closed sequentially again even when the pressure drop occurs while the valve is opened to thus prevent the pressure drop to the oxygen inflow pressure, thereby securing an improved safety by suppressing the combustion in the battery pack 10.

Meanwhile, the nth valve, or the fourth valve 24 shown in this drawing, may be opened when the internal pressure continuously rises even while the xth valve is opened. The opening pressure of the corresponding valve may be set to have a pressure near the pressure at which the housing 11 may be destroyed. Accordingly, the nth valve may be opened to drop the internal pressure by emitting the gas to the outside before the internal pressure reaches the housing destruction pressure. In this way, it is possible to prevent the internal pressure of the battery pack 10 from reaching the housing destruction pressure, thereby preventing the housing destruction, that is, the battery pack 10 from being exploded due to its internal pressure.

After the nth valve or the fourth valve 24 in this embodiment is closed, the internal pressure may drop, and in a process in which the internal pressure drops, previous valves may be closed sequentially to thus prevent a rapid internal pressure drop. In addition, in this process, the internal combustion and thermal event of the battery pack 10 may be ended, thus ending a thermal event state without the destruction of the housing 11 and external propagation of the internal combustion.

In this way, the thermal event state may be stably ended to thus end the thermal event state without the destruction or explosion of the housing 11 of the battery pack 10, thereby preventing the external thermal propagation and securing the improved safety of the battery pack 10. In addition, in this embodiment, the plurality of valves 20 may be opened sequentially based on the pressure rise and closed sequentially based on the pressure drop rather than being opened collectively when the internal pressure rises, or being incapable of being closed after opened, thereby preventing the explosion due to an external oxygen inflow. That is, the explosion may occur due to a rapid external oxygen inflow caused by a rapid internal pressure drop when the valves are opened collectively, or when the plurality of valves all remain opened despite the pressure drop because the valves are incapable of being closed after opened. According to an embodiment of the present disclosure, the internal pressure may be maintained within a certain range by opening and closing the valves sequentially, thereby preventing the explosion.

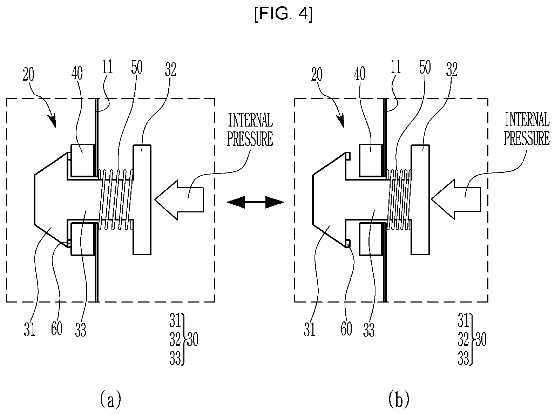

Hereinafter, the description describes a specific example of the valve that may be used in the present disclosure with reference to FIGS. 4 to 6.

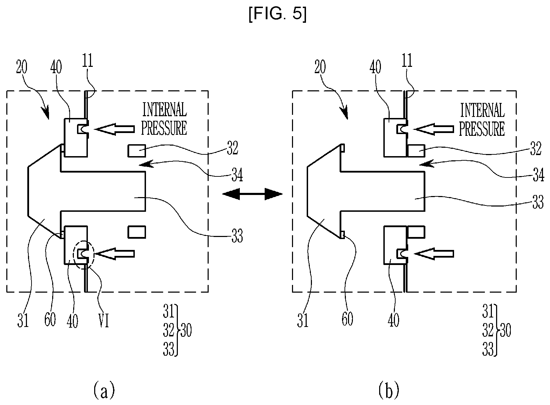

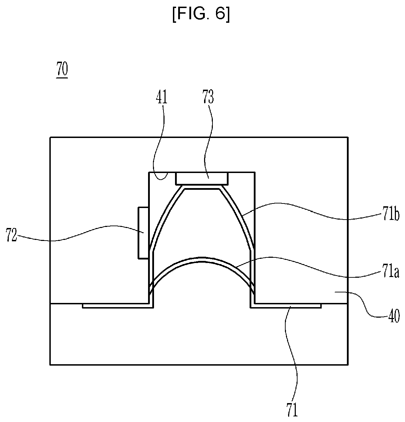

FIGS. 4A and 4B are views each schematically showing the structure and opening and closing process of the valve in the battery pack of FIG. 2; FIGS. 5A and 5B are views each schematically showing the structure and opening and closing process of the valve in the battery pack according to another embodiment of the present disclosure; and FIG. 6 is an enlarged view of a portion VI of FIG. 5.

As shown in FIG. 4, the valve 20 according to an embodiment of the present disclosure may include a valve body part 30 including a first flange part 31 disposed outside the housing 11, a second flange part 32 disposed in the housing 11, and a connection part 33 connecting the first and second flange parts 31 and 32 to each other. A gasket 60 may be disposed in the first flange part 31 along its edge, and a support part 40 may be disposed between the gasket 60 and the housing 11 and in contact with the gasket 60 while the internal pressure is not applied. In addition, an elastic part 50 may be disposed between an inner surface of the housing 11 and the second flange part 32, surround the connection part 33, and include a spring or the like.

In this structure, the valve 20 may be opened by compressing the elastic part 50 when the internal pressure is applied thereto. That is, FIG. 4A, i.e., the drawing on the left, shows a state where the valve 20 is closed before the internal pressure is applied thereto. In this state, when the internal pressure is applied to the second flange part 32, the elastic part 50 may be compressed to push the valve body part 30 outward. As a result, the gasket 60 and the support part 40 may fall away from the valve body part 30 and the valve 20 may be opened, as shown in FIG. 4B, i.e., the drawing on the right. In this state, when the internal pressure is reduced to reach the closing pressure of the valve 20, the compression of the elastic part 50 may be released and the valve 20 may be closed to return to the same state as shown in FIG. 4A. Accordingly, a size of the internal pressure for opening and closing the valve 20 may be determined by a size of an elastic force of the elastic part 50 and/or a size of the valve 20.

Meanwhile, as shown in FIGS. 5A and 5B, the valve 20 may have its opening and closing controlled by including a sensor part 70 instead of the elastic part 50. That is, the valve 20 according to another embodiment of the present disclosure may include the sensor part 70 disposed in the support part 40, that is, disposed in one surface of the valve 20 that communicates in the housing 11. The valve 20 may be opened and closed by the sensor part 70 causing the valve body part 30 to advance and retreat outward from the housing 11. That is, FIG. 5A shows the state where the valve 20 is closed as the valve body part 30 is disposed toward the inside of the housing 11 and the gasket 60 and the support part 40 come into contact with each other, and FIG. 5B shows the state where the valve 20 is closed as the valve body part 30 is moved outward from the housing 11. Here, the valve 20 of this embodiment may further include a gas communication hole 34 in the second flange part 32 to form a gas passage especially while the valve is opened, as shown in FIG. 5B.

Referring to FIG. 6, the sensor part 70 controlling the opening and closing of the valve 20 in this way may include a sensing wire 71 disposed in a sensing hole 41 and first and second sensors 72 and 73, formed in an inner surface of the support part 40. The sensing wire 71 may be recessed inward from the sensing hole 41 by the internal pressure, and it may thus be determined whether the internal pressure rises based on whether the sensing wire 71 is in contact with the sensors.

In detail, when in a normal state, the sensing wire 71 may be disposed at a position 71a in the drawing and may not come into contact with the sensors 72 and 73, and here, the valve 20 may remain closed. When the sensing wire 71 is recessed inward to reach a position 71b in the drawing due to the internal pressure, the sensing wire 71 may come into contact with both the first and second sensors 72 and 73, and the valve 20 may here be controlled to remain opened. The valve 20 may be controlled to be closed again when the sensing wire 71 is first released from its contact with the second sensor 73 and also released from its contact with the first sensor 72 in a process in which the internal pressure is reduced and the sensing wire 71 thus returns to the position 71a. In this way, when controlling the opening and closing of the valve 20 by using the sensor part 70, the opening and closing pressures of the valve 20 may be set differently based on settings of the sensors 72 and 73.

As described above, the battery pack according to an embodiment of the present disclosure may secure the improved safety by including the plurality of valves capable of being opened and closed sequentially, in which the plurality of valves may be opened and closed even when the thermal event occurs therein to rise the internal pressure to thus prevent the housing destruction and the external oxygen inflow, thereby preventing the explosion of the battery pack.

The battery pack described above may be applied to a variety of devices. Such a device may be applied to transportation means such as an electric bicycle, an electric vehicle, and a hybrid vehicle. However, the present disclosure is not limited thereto, and may be applied to the various devices which may use the battery module and the battery pack including the same, which also falls within the scope of the present disclosure.

Although the embodiments of the present disclosure have been described in detail hereinabove, the scope of the present disclosure is not limited thereto, and may include several modifications and alterations made by those skilled in the art using a basic concept of the present disclosure as defined in the claims.

### <Description of symbols>

100: battery module
10: battery pack
20: valve
30: valve body part
40: support part
50: elastic part
60: gasket
70: sensor part

## Claims

1. A battery pack comprising:
a plurality of battery modules; and
a housing accommodating the plurality of battery modules,
wherein the housing has a plurality of valves capable of being opened and closed, and
the plurality of valves are opened and closed sequentially based on an internal pressure of the housing.

2. The battery pack of claim 1, wherein
the plurality of valves include first to nth valves, and
an opening pressure of each of the plurality of valves is greater than or equal to a pressure at which external oxygen flows into the housing and less than or equal to a pressure at which the housing is destroyed.

3. The battery pack of claim 2, wherein
the nth valve is opened as the internal pressure of the housing rises while the first to n-1th valves are opened.

4. The battery pack of claim 3, wherein
the nth to first valves are closed sequentially as the internal pressure of the housing drops.

5. The battery pack of claim 1, wherein
any one of the plurality of valves includes
a valve body part including a first flange part disposed outside the housing, a second flange part disposed in the housing, and a connection part connecting the first flange part and the second flange part to each other, and
an elastic part disposed between the second flange part and the housing and surrounding the connection part.

6. The battery pack of claim 5, wherein
the valve is opened by compressing the elastic part by compressing the second flange part when the internal pressure of the housing rises.

7. The battery pack of claim 5, wherein
each of the plurality of valves has a different opening pressure by at least one of a different size of the valve body part and a different elastic force of the elastic part.

8. The battery pack of claim 1, wherein
any one of the plurality of valves includes
a valve body part including a first flange part disposed outside the housing, a second flange part disposed in the housing, and a connection part connecting the first flange part and the second flange part to each other,
a support part disposed between the first flange part and the housing, and
a sensor part disposed in one surface of the support part that faces the inside of the housing.

9. The battery pack of claim 8, wherein
the second flange part further includes a gas communication hole configuring an internal gas emission passage while the valve is opened.

10. The battery pack of claim 9, wherein
the sensor part includes a sensing hole concave in the one surface of the support part,
a sensing wire disposed in the sensing hole, and
one or more sensors sequentially coming into contact with the sensing wire.

11. A device including the at least one battery pack of claim 1.
